# EUROPEAN PATENT SPECIFICATION

(11) **EP 1 452 914 B1**
(45) Date of publication and mention of the grant of the patent: **23.07.2008**
(21) Application number: 04004538.7
(22) Date of filing: 27.02.2004
(51) Int. Cl.: G03D 15/00, G03B 27/46, H04N 1/00, G06T 1/60, G06F 3/12

(54) **Image data processing system**
Verarbeitungssystem für Bilddaten
Système de traitement de données d'image

(30) Priority: 28.02.2003 JP 2003052983
(43) Date of publication of application: 01.09.2004
(73) Proprietor: NORITSU KOKI CO., LTD., Wakayama-shi, Wakayama-ken 640-8550 (JP)
(72) Inventor: Ooue, Masahide, Wakayama-shi Wakayama-ken, 640-8550 (JP); Tsujioka, Nobuhiro, Wakayama-shi Wakayama-ken, 640-8550 (JP); Tsuji, Yuki, Wakayama-shi Wakayama-ken, 640-8550 (JP)
(74) Representative: Sajda, Wolf E.

(56) References cited:
- EP-A- 0 977 084
- US-A1- 2002 131 080
- US-B1- 6 347 162
- PATENT ABSTRACTS OF JAPAN vol. 1998, no. 11, 30 September 1998 (1998-09-30) & JP 10 150538 A (FUJI PHOTO FILM CO LTD), 2 June 1998 (1998-06-02)
- PATENT ABSTRACTS OF JAPAN vol. 1996, no. 10, 31 October 1996 (1996-10-31) & JP 08 156343 A (PFU LTD), 18 June 1996 (1996-06-18)

## Description

### 1. Field of the Invention

The present invention relates to an image data processing system including an image inputting section for inputting image data and an image processing section for performing image processing on the input image data to create image data for printing, by which prints are prepared with the use of the image data for printing in a print preparing device while the image data for printing are stored into an image storing device.

### 2. Description of the Related Art

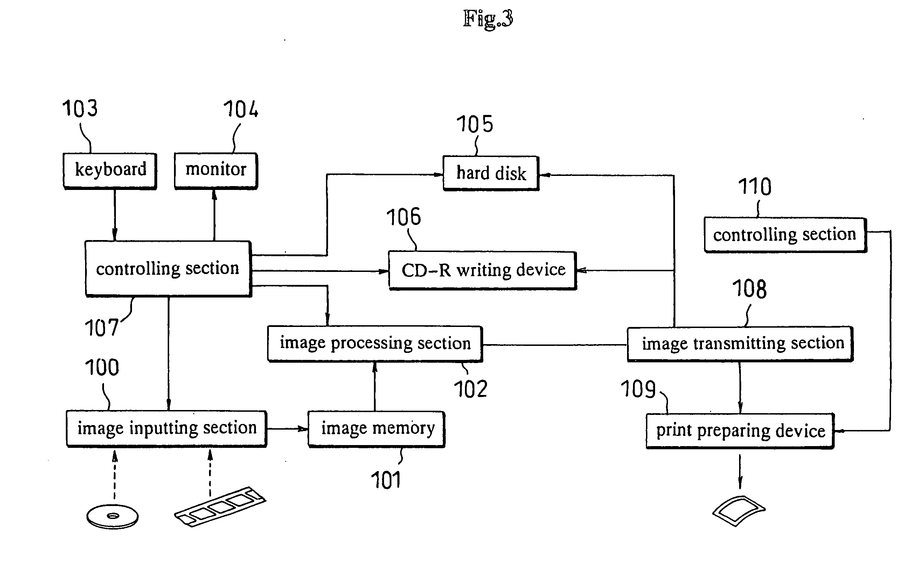

Fig. 3 shows a construction of such an image data processing system according to the prior art. An image inputting section 100 obtains image data from a negative film or a medium. An image memory 101 temporarily stores the image data that are input from image inputting section 100. An image processing section 102 performs various images processing on the input image data to create image data for printing for preparing prints. A keyboard 103 is used for giving instructions to various sections in the system or for inputting information necessary for the image memory. A monitor 104 displays the input image data or displays a screen necessary for performing the print processing. A hard disk 105 is one kind of a storing medium and stores image data for printing so that a request for reprinting (process for making additional prints) on a later date can be met without the negative film. A CD-R writing device 106 is a device for writing image data into a CD-R which is an external recording medium. A controlling section 107 performs operation controls over image inputting section 100, image processing section 102, hard disk 105, CD-R writing device 106, and others. Controlling section 107 is constituted with one or more CPUs and various controlling programs as a core.

An image transmitting section 108 is constructed to be capable of transmitting the image data for printing, which are created in image processing section 102, to a print preparing device 109 or to hard disk 105 or CD-R writing device 106. Print preparing device 109 is constituted with a mechanism for conveying a light-sensitive picture material, an exposing engine for exposing an emulsion surface of the light-sensitive picture material with images by using the received image data for printing, a developing processing section for developing the exposed light-sensitive picture material, and others. Print preparing device 109 is controlled by a controlling section 110. Image data for printing refer to data having a form that can be used as they are in the aforesaid exposing engine. The exposing engine may be, for example, a laser engine, a PLZT engine, a CRT engine, or the like.

Contents of the image processing performed in image processing section 102 may be varied. For example, they may include image processing based on correction values that are input from keyboard 103 for correcting the color and density, image processing (conversion process) for enlarging or diminishing the size in order to meet the requested print size, γ-correction of the light source of the exposing engine, and the like. In any way, image transmitting section 108 is constructed to be capable of transmitting image data for printing having a size that meets the requested size of the prints to be prepared.

The aforementioned construction according to the prior art gives rise to the following problems. Namely, there is a problem in that, when one wishes to perform a process of preparing prints in print preparing device 109 on the basis of the input image data and a process of storing or writing into hard disk 105 or CD-R on the basis of the image data in parallel, the print preparation efficiency (for example, as represented by the number of printed sheets prepared per one hour) decreases. Particularly, in the case of storing the image data after performing a process such as enlarging or diminishing the size instead of storing the image data for printing transmitted to print preparing device 109, as they are, into hard disk 105, the process is carried out in image processing section 102, so that the load imposed on image processing section 102 increases, and the amount of data transmitted from image transmitting section 108 falls. This also applies to the case of writing the image data into CD-R writing device 106. Since controlling section 107 performs controls over image inputting section 100, hard disk 105, CD-R writing device 106, and others, the image data cannot be input from image inputting section 100 or else the inputting efficiency decreases while the image data are being stored or written. If the image data cannot be input efficiently, the speed of image processing or image transmission in a later step also decreases and, as a result, the print preparation efficiency also inevitably decreases.

Documents US 6 347 163 B and EP 0 977 084 A disclose other image data processing systems.

The present invention has been made in order to solve the aforementioned problems of the prior art and an object thereof is to provide an image data processing system that can prevent decrease in the efficiency of preparing prints when one wishes to store or write image data into a storing medium in parallel with the process of preparing the prints.

### SUMMARY OF THE INVENTION

In order to solve the aforementioned problems, the image data processing system according to the present invention comprises the features of claim 1. In particular, the system comprises
an image inputting section for inputting image data;
an image processing section that performs image processing on the input image data to create image data for printing;
a first controlling section that performs controls over said image inputting section and said image processing section; and
an image transmitting section capable of simultaneously transmitting said image data for printing to a print preparing device and to an image storing device, characterized in that said image storing device includes an image receiving section that receives said image data for printing that are transmitted from said image transmitting section; a storing medium for storing the received image data; and
a second controlling section that performs controls over said image receiving section and said storing medium.

The image data processing system according to this construction provides the following functions and effects. The image processing section performs image processing on the input image data and creates (prepares) image data for printing. The first controlling section performs controls over the image inputting section and the image processing section. With respect to the created image data for printing, the system is constructed in such a manner that the same data can be simultaneously transmitted both to the print preparing device and the image storing device via the image transmitting section. The image storing device includes the image receiving section (buffer substrate or the like) for receiving the image data for printing transmitted from the image transmitting section and the storing medium (hard disk or the like) for storing the received image data. These are controlled by the second controlling section. In other words, the process of storing the image data into the storing medium can be carried out by the second controlling section which is independent from the first controlling section. Therefore, subsequent processes on the image data for printing transmitted to the image storing device side are carried out under the instructions from the second controlling section of the image storing device. In other words, the process of storing the image data into the storing medium can be carried out separately from the image processing in the image processing section and the inputting process in the image inputting section (without affecting these). For example, in addition to storing the received image data for printing as they are, the image data can be stored after being subjected to some processing. As a result, an image data processing system can be provided in which the efficiency of preparing prints does not fall when the image data are stored into the storing medium in parallel with the process of preparing the prints.

A preferable mode of carrying out the invention is one in which the system further includes an external recording section for recording the received image data into an external recording medium, and the external recording section also is controlled by said second controlling section.

For example, in the case of recording the image data into an external recording medium such as a CD-R, the control over the external recording section (for example, a CD-R driving device) also is carried out by the second controlling section. Therefore, even if the process of writing the image data into the external recording medium is carried out in parallel with the print preparing process, the efficiency of preparing the prints does not fall down.

The system further includes conversion processing sections that perform a conversion process on said received image data, and is constructed so that the image data subjected to the conversion process are stored into said storing medium and/or said external recording medium.

There are cases in which the image data for printing are stored after being subjected to a conversion process instead of being stored into a storing medium or an external recording medium as they are. For example, one may perform a process of enlarging or diminishing the size of the images. If this conversion process is carried out under the instructions from the first controlling section, the print preparation efficiency falls down. However, if the conversion process is carried out under the instructions from the second controlling section, the conversion process can be carried out and the image data can be stored without decreasing the print preparation efficiency.

The system further includes a first conversion processing section that performs a conversion process on the image data for printing that are constructed in said image processing section;
a second conversion processing section that performs a conversion process on the image data for printing that are constructed in said image receiving section; and
conversion process selecting means for selecting either one of said first conversion processing section and said second conversion processing section.

When the aforesaid conversion processing section for performing the process of enlarging or diminishing the image size is to be provided, the conversion processing section can be provided both in the image processing section which is under control of the first controlling section and in the image receiving section which is under control of the second controlling section. Then, conversion process selecting means can select either one of the two. For example, in accordance with the required capability (efficiency) of preparing prints, an operator can select which of the two conversion processes is to be carried out. Else, by allowing the first conversion processing section and the second conversion processing section to perform different processes, the operator can select a process in accordance with the capability.

### BRIEF DESCRIPTION OF THE DRAWINGS

Fig. 1 is a conceptual view illustrating an overall construction of an image data processing system.
Fig. 2 is a flow chart of a representative processing procedure.
Fig. 3 is a view illustrating an overall construction of an image data processing system according to the prior art.

### DETAILED DESCRIPTION OF THE PREFERRED EMBODIMENTS

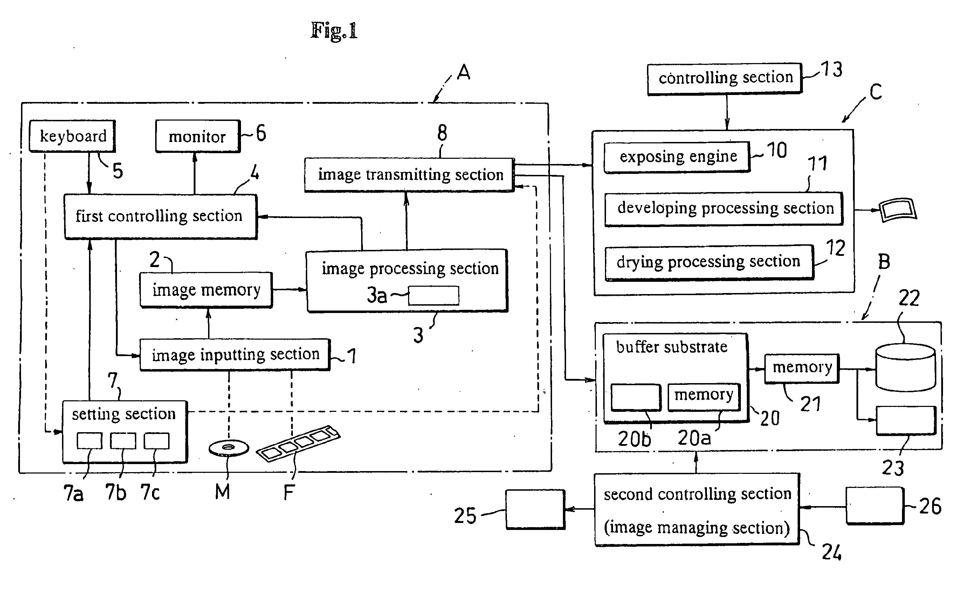

A preferable embodiment of the image data processing system according to the present invention will be described with reference to the attached drawings. Fig. 1 is a conceptual view illustrating an overall construction of the system. This image data processing system is a system for inputting image data and for preparing picture prints with the use of the image data as well as storing the image data.

### System construction

Functionally, the system can be roughly divided into image processor A, image storing device B, and printer processor (print preparing device) C. First, image processor A will be described. Image processor A has a function of obtaining image data for preparing prints and performing image processing. Image inputting section 1 is provided for inputting and obtaining image data from an image forming medium. In the case of reading framed images from a picture film such as a negative film F, an exclusive-use scanner for films is used. Further, one can obtain image data also from various media M (MO disk, flexible disk, storing medium for digital cameras, and others) in which digital images are recorded. The obtained image data are temporarily sent and stored into image memory 2.

Image processing section 3 has a function of performing various images processing for creating image data for printing that are used for preparing prints. The image processing function can be realized by a suitable combination of hardware and software. First controlling section 4 has a function of performing operation control within image processor A. First controlling section 4 is constructed with one or more CPUs, a controlling program, and others as a core. Keyboard 5 is used for giving instructions to various sections in the system and for inputting and setting various data. Monitor 6 is used for confirming the progress of the print process and for displaying the obtained image data to determine the color and density, or the like. Setting section 7 is provided for setting a mode of the print process and for setting the mode or the like of storing the image data, and is based on the function of software.

Image processing carried out in image processing section 3 may be, for example, as follows. Image data of framed images are read out from a developed negative film F and displayed on monitor 6. While looking at the displayed screen, an operator determines whether prints can be made with suitable color and density, and inputs correction values of color and density from keyboard 5 in accordance with the needs. Based on these correction values, the image data are corrected. Further, when picture prints are to be prepared, the image data must have a size that meets the print size. For this purpose, the obtained image data are subjected to an enlarging or diminishing process. This is carried out as a function of the first conversion processing section 3a in image processing section 3. Further, one can carry out an enlarging or diminishing process into a standard size such as 4BASE or 16BASE (1BASE = 512 x 768 pixels). Furthermore, one can carry out a compression process such as JPEG. Image data for printing prepared in image processing section 3 are transmitted from image transmitting section 8.

Printer processor C includes exposing engine 10, developing processing section 11, and drying processing section 12. Each section in printer processor C is controlled by controlling section 13. When the image data for printing are received from image transmitting section 8, exposing engine 10 exposes an emulsion surface of a light-sensitive picture material with images by making use of the image data. Exposing engine 10 to be used may be of a suitable type such as laser engine, PLZT engine, or CRT engine. Developing processing section 11 performs a developing process on the light-sensitive picture material exposed and printed with images. Drying processing section 12 performs a drying process on the developed light-sensitive picture material. Finished picture prints are discharged from a print discharging section. Image processing section 3 prepares image data for printing that can be used, as they are, in exposing engine 10.

Next, image storing device B will be described. Image storing device B is used mainly for storing and managing the image data. Image storing device B can be constructed, for example,with a general personal computer. Therefore, image storing device B may include additional functions other than the storage and management of images.

Buffer substrate 20 functions as an image receiving section, and can receive image data (image data for printing) that are transmitted from image transmitting section 8. Buffer substrate 20 includes buffer memory 20a, and temporarily stores the received image data. Buffer memory 20a may have a storing capacity for several sheets of images. Second conversion processing section 20b has a function of performing a conversion process on the received image data. This function is similar to the one in the first conversion processing section 3a of image processing section 3. Second conversion processing section 20b is constructed with hardware so that the processing speed may increase. Main memory 21 (corresponding to the main storing device of a personal computer) receives the image data from buffer memory 20a. Here, the received image data for printing can be stored or written, as they are, into hard disk 22 or CD-R without being subjected to the process of second conversion processing section 20b.

The image data developed in main memory 21 are sent to hard disk 22 (corresponding to the storing medium) and/or to the CD-R (external recording medium) of CD-R writing device 23 (corresponding to the external recording section). A photograph shop that has received a request for preparing picture prints from a customer not only prepares picture prints by using the obtained image data but also stores the image data into hard disk 22. This is to use the stored image data when a request for a process of making additional prints (reprinting) is received from the customer at a later date. By storing the image data in hard disk 22, the customer can request for reprinting without bringing the negative film or the like to the photograph shop. Further, there is no need to scan the negative film again, so that the operation efficiency of the reprinting process will be enhanced.

Furthermore, a customer may request for a process of writing the image data into a CD-R in addition to preparation of picture prints. In this case also, the image data are written with the use of image storing device B. A CD-R is given as an example of the external recording medium; however, it is not limited to this alone, so that the image data may be written into other external recording media such as a DVD.

The second controlling section 24 performs controls over various sections of image storing device B. The second controlling section 24 is constituted with a CPU, image managing software (corresponding to the image managing section), and others as a core. This image managing software has a function of storing the received image data into hard disk 22 to form a database. The image data are managed and stored order by order. An image ID (corresponding to a frame number) and an order ID are given to the stored image data. When making reprints, one can search into the database with the use of these IDs as a key, so as to extract the image data that are to be reprinted. Monitor 25 and keyboard 26 are connected to the second controlling section 24.

In setting section 7 of image processor A, a mode of processing the image data can be set. For example, one can set a mode for simultaneously performing "preparation of picture prints + storage into hard disk + writing into CD-R", a mode for simultaneously performing "preparation of picture prints + storage into hard disk", or a mode for simultaneously performing "preparation of picture prints + writing into CD-R". Further, when the preparation of picture prints is not to be carried out, one can select a mode for performing storage into hard disk and/or writing into CD-R. At ordinary times, the image data are stored at least into the hard disk. These are based on the function of process mode selecting means 7b of setting section 7.

Further, as a function of setting section 7, one can set whether the process of converting the image data are to be carried out in the first conversion processing section 3a or in the second conversion processing section 20b. One can select either one of the two conversion processing sections in accordance with the needed picture print preparation capability. This is based on the function of conversion process selecting means 7a of setting section 7. Further, for example, for a user that wishes to write the image data obtained by scanning a negative film into CD-R without performing any process, a mode is provided by which the image data obtained in image inputting section 1 can be transmitted, as they are, to the image storing device B side. This mode also can be selected by the function of process mode selecting means 7b.

In addition, in the case of storing or writing the image data in an image compression mode such as JPEG, one can select its compression ratio. This is based on the function of compression ratio selecting means 7c of setting section 7. At ordinary times, it is preferable to set the numerical value of the compression ratio to be high (for example, about 90%). The compression method is not limited to JPEG alone, so that other compression methods may be employed.

### System function

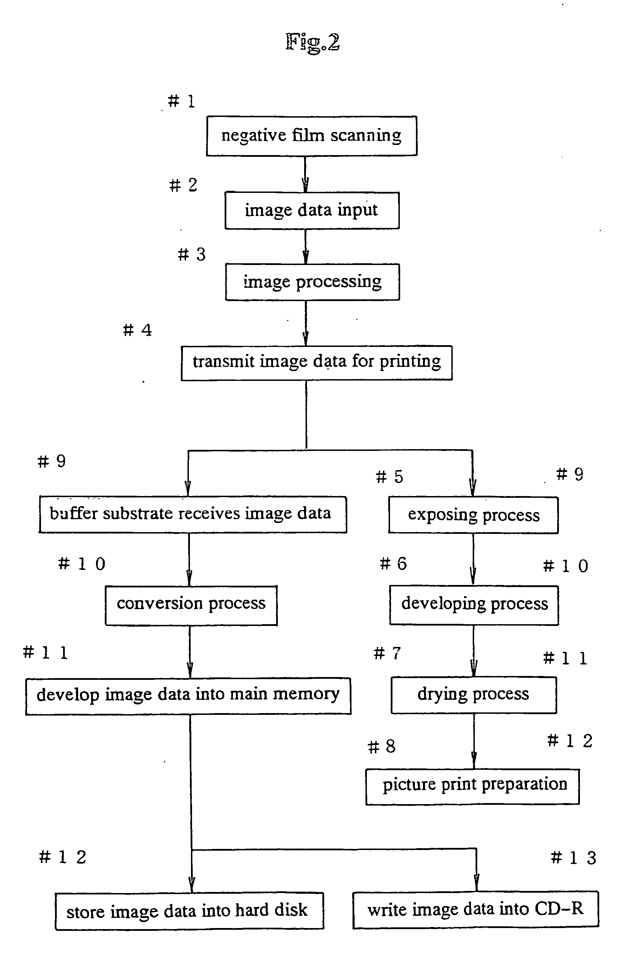

Next, a representative processing procedure according to the image data processing system of Fig. 1 will be described with reference to the flowchart of Fig. 2. First, as a processing mode, one selects a mode for simultaneously performing "preparation of picture prints + storage into hard disk + writing into CD-R" in parallel. Further, the process of converting the image data is set to be carried out on the image storing device side.

First, a developed negative film F is set into a scanner, which is the image inputting section 1, so as to carry out scanning (#1). The image data of the read negative film are stored into image memory 2 (#2). When the image data for one order (corresponding to one roll of negative film) are obtained, the images are displayed on monitor 6. While looking at the images displayed on monitor 6, an operator determines the color and density, and inputs correction values of the color and density in accordance with the needs.

Image processing section 3 performs image processing on the obtained image data on the basis of the input correction values (#3). Further, image processing section 3 performs other image processing (color management process, γ-correction of the light source, and the like), and also performs a process of enlarging or diminishing the size in order to meet the print size. The above-described procedure completes the preparation of image data for printing.

Image transmitting section 8 transmits the image data for printing prepared by image processing section 3, simultaneously to the printer processor C side and to the image storing device B side (#4). Since the image data to be sent to both sides are the same, the image data can be simultaneously transmitted. After the image data for printing are transmitted, controls over various sections in image storing device B are carried out not by the first controlling section 4 but by the second controlling section 24. Further, the control over printer processor C also is carried out by controlling section 13. Therefore, the processes in image inputting section 1 and in image processing section 3 are not delayed by the process of storing or writing the image data carried out by image storing device B. Therefore, the image data for printing can be transmitted to printer processor C without interruptions, thereby preventing decrease in the print preparation efficiency. The system is constructed in such a manner that, basically, the image processor A side is not involved in the processes subsequent to transmission of the image data for printing from image transmitting section 8 to the image storing device B side. For this reason, the overall processing efficiency of the system is prevented from falling down even if the print preparing process and the image storing/writing process are carried out simultaneously.

In printer processor C, when the image data for printing are received, an exposing process is carried out by exposing engine 10 (#5). Namely, a light-sensitive picture material is exposed and printed with images on the basis of the image data for printing. Subsequently, a developing process and a drying process are carried out on the light-sensitive picture material so as to prepare picture prints (#6, 7, 8).

On the other hand, the image data for printing transmitted from image transmitting section 8 are received by buffer substrate 20. The image data for printing are temporarily developed into buffer memory 20a provided in buffer substrate 20. Here, if it is set that a conversion process is to be carried out, the process of converting the image data for printing (compression by JPEG, process of enlarging or diminishing the size, and others) is carried out in the second conversion processing section 20b (#10). If the conversion process is not to be carried out, the process of step #10 is not executed. Next, by the function of the image managing software, the image data developed in buffer memory 20a are read out and developed into main memory 21 (#11). Subsequently, the image data in main memory 21 are stored into hard disk 22 and also sent to CD-R writing device 23 to be written into a CD-R (#12, #13).

According to this processing procedure, it is set that the conversion process is carried out on buffer substrate 20, thereby preventing decrease in the print preparation efficiency. In Fig. 3 of the prior art, the conversion process which is carried out on buffer substrate 20 must be carried out in image processing section 102, so that the print preparation efficiency inevitably falls down. It is preferable if the second conversion processing section 20b is constructed in particular with hardware, because the process can be executed at a high speed.

According to the system construction of Fig. 1, storage into hard disk 22 and writing into CD-R writing device 23 can be carried out while a negative film is being scanned in image inputting section 1. Due to this reason also, the processing speed is raised. According to the prior-art system, it is difficult to carry out these processes at the same time.

In the flowchart of Fig. 2, a construction has been described in which the same image data for printing are simultaneously transmitted from image transmitting section 8. If different image data are to be transmitted to the two, simultaneous transmission is not possible, so that the image data must be transmitted at different timings. For example, if the image data subjected to the conversion process by the first conversion processing section 3a of image processing section 3 are to be transmitted to image storing device B, the image data to be transmitted to printer processor C are different from the image data to be transmitted to image storing device B, so that they are transmitted at different timings. In this case also, the efficiency is good as compared with the prior-art system of Fig. 3, though the processing efficiency falls down as compared with the case of simultaneous transmission.

### Other embodiments

(1) When the image data are transmitted from image transmitting section 8 to image storing device B, the connection is established, for example, by an exclusive-use line; however, the connection method is not limited to this alone. Image processor A and image storing device B may be connected by a general-use network. Further, in this case, the number of apparatus to be connected is not limited to specific numbers.
(2) If image storing device B is constructed with a general personal computer, image storing device B can be connected to a network such as the internet. This allows that a customer can request, via the internet, a reprinting process using the image data stored in hard disk 22.
(3) The print preparing device may be an ink jet or thermal sublimation type printer other than printer processor C.

## Claims

1. An image data processing system comprising:
- an image inputting section (1) for inputting image data;
- an image processing section (3) that is adapted to perform image processing on the input image data to create image data for printing;
- a first controlling section (4) that is adapted to perform controls over the image inputting section (1) and the image processing section (3); and
- an image transmitting section (8) capable of simultaneously transmitting the image data for printing to a print preparing device (C) and to an image storing device (B), wherein the image storing device (B) includes:
- an image receiving section (20) that receives the image data for printing that are transmitted from the image transmitting section (8);
- a storing medium (22) for storing the received image data; and
- a second controlling section (24) that is adapted to perform controls over the image receiving section (20) and the storing medium (22);
**characterized in that** the system further includes:
process mode selecting means (7b) capable of selecting a mode among the following group of modes:
(i) a mode for simultaneously performing preparation of picture prints and storage into the storing medium (22) being a hard disk and writing into a CD-R,
(ii) a mode for simultaneously performing preparation of picture prints and storage into the storing medium (22) being a hard disk,
(iii) a mode for simultaneously performing preparation of picture prints and writing into CD-R, and
(iv) a mode for performing storage into the storing medium (22) being a hard-disk and/or writing into CD-R;
a first conversion processing section (3a) that is adapted to perform a conversion process on the image data for printing that are constructed in the image processing section (3);
a second conversion processing section (20b) that is adapted to perform a conversion process on the image data for printing that are constructed in the image receiving section (20); and
conversion process selecting means (7a) for selecting either one or both of the first conversion processing section (3a) and the second conversion processing section (20b) in accordance with the needed picture print preparation capability;
wherein the conversion process comprises a process of enlarging or diminishing the size of the image data so that the image data are adapted to a standard size for printing; and
wherein the conversion process comprises a compression process;
wherein, when picture prints are to be prepared, the first conversion processing section (3a) carries out said process of enlarging or diminishing, and,
when the second conversion processing section (20b) is selected, said process of compression is carried out by the second conversion processing section (20b).

2. The system according to claim 1, further
**characterized in that** the system further includes a secondary recording section (23) for recording the received image data into a secondary recording medium, distinct from the storing medium (22) and **in that** the secondary recording section (23) is also controlled by the second controlling section (24).

3. The system according to claim 1 or 2, further
**characterized in that** the process mode selecting means (7b) is capable of selecting a mode for storing the image data into the image storing device (B) without performing a conversion process on the image data.

## Patentansprüche

1. Bilddatenverarbeitungssystem, das folgendes aufweist:
- einen Bildeingabebereich (1) für die Eingabe von Bilddaten;
- einen Bildverarbeitungsbereich (3), der dazu ausgebildet ist, eine Bildverarbeitung bei den eingegebenen Bilddaten auszuführen, um Bilddaten für einen Druckvorgang zu erzeugen:
- einen ersten Steuerbereich (4), der dazu ausgebildet ist, Steuervorgänge in dem Bildeingabebereich (1) und dem Bildverarbeitungsbereich (3) auszuführen; und
- einen Bildübertragungsbereich (8), der in der Lage ist, die Bilddaten für den Druckvorgang gleichzeitig zu einer Druckvorbereitungsvorrichtung (C) und zu einer Bildspeichervorrichtung (B) zu übertragen, wobei die Bildspeichervorrichtung (B) folgendes aufweist:
- einen Bildempfangsbereich (20), der die Bilddaten für den Druckvorgang empfängt, die von dem Bildübertragungsbereich (8) übertragen werden;
- ein Speichermedium (22) zum Speichern der empfangenen Bilddaten; und
- einen zweiten Steuerbereich (24), der dazu ausgebildet ist, Steuervorgänge in dem Bildempfangsbereich (20) und dem Speichermedium (22) auszuführen;
**dadurch gekennzeichnet,**
**daß** das System ferner folgendes aufweist:
eine Prozeßmodus-Auswahleinrichtung (7b), die in der Lage ist, einen Modus aus der nachfolgenden Gruppe von Modi auszuwählen:
(i) einen Modus zum gleichzeitigen Ausführen einer Vorbereitung für Bildausdrucke und einer Speicherung auf dem Speichermedium (22), bei dem es sich um eine Festplatte handelt, sowie eines Schreibvorgangs auf einer CD-R,
(ii) einen Modus zum gleichzeitigen Ausführen einer Vorbereitung für Bildausdrucke und einer Speicherung auf dem Speichermedium (22), bei dem es sich um eine Festplatte handelt,
(iii) einen Modus zum gleichzeitigen Ausführen einer Vorbereitung für Bildausdrucke und eines Schreibvorgangs auf einer CD-R, und
(iv) einen Modus zum Ausführen einer Speicherung auf dem Speichermedium (22), bei dem es sich um eine Festplatte handelt, und/oder eines Schreibvorgangs auf einer CD-R;
einen ersten Umwandlungsverarbeitungsbereich (3a), der dazu ausgebildet ist, einen Umwandlungsprozeß bei den Bilddaten für den Druckvorgang auszuführen, die in dem Bildverarbeitungsbereich (3) erzeugt werden;
einen zweiten Umwandlungsverarbeitungsbereich (20b), der dazu ausgebildet ist, einen Umwandlungsprozeß bei den Bilddaten für den Druckvorgang auszuführen, die in dem Bildempfangsbereich (20) erzeugt werden; und
eine Umwandlungsprozeß-Auswahleinrichtung (7a) zum Auswählen von einem oder beiden von dem ersten Umwandlungsverarbeitungsbereich (3) und dem zweiten Umwandlungsverarbeitungsbereich (20b) in Abhängigkeit von der erforderlichen Bildausdruck-Vorbereitungsfähigkeit;
wobei der Umwandlungsprozeß einen Vorgang beinhaltet, in dem die Größe der Bilddaten vergrößert oder verkleinert wird, so daß die Bilddaten an eine Standardgröße für den Druckvorgang angepaßt werden; und
wobei der Umwandlungsprozeß einen Komprimiervorgang beinhaltet;
wobei dann, wenn Bildausdrucke vorbereitet werden sollen, der erste Umwandlungsverarbeitungsbereich (3a) den Vergrößerungs- oder Verkleinerungsvorgang ausführt, und dann, wenn der zweite Umwandlungsverarbeitungsbereich (20b) ausgewählt wird, der Komprimiervorgang von dem zweiten Umwandlungsverarbeitungsbereich (20b) ausgeführt wird.

2. System nach Anspruch 1,
weiterhin **dadurch gekennzeichnet,**
**daß** das System ferner einen zusätzlichen Aufzeichnungsbereich (23) zum Aufzeichnen der empfangenen Bilddaten auf einem zusätzlichen Aufzeichnungsmedium aufweist, das von dem Speichermedium (22) verschieden ist,
und **daß** der zusätzliche Aufzeichnungsbereich (23) ebenfalls von dem zweiten Steuerbereich (4) gesteuert wird.

3. System nach Anspruch 1 oder 2,
weiterhin **dadurch gekennzeichnet,**
**daß** die Prozeßmodus-Auswahleinrichtung (7b) in der Lage ist, einen Modus zum Speichern der Bilddaten in der Bildspeichervorrichtung (B) auszuwählen, ohne daß bei den Bilddaten ein Umwandlungsprozeß ausgeführt wird.

## Revendications

1. Système de traitement de données images, comprenant :
- une unité de saisie d'images (1) pour saisir des données images ;
- une unité de traitement d'images (3) qui est adaptée à exécuter un traitement d'images sur les données images saisies pour créer des données images pour l'impression ;
- une première unité de commande (4) qui est adaptée à exécuter les commandes sur l'unité de saisie d'images (1) et sur l'unité de traitement d'images (3) ; et
- une unité de transmission d'images (8) capable de transmettre simultanément les données images pour l'impression à un dispositif de préparation d'impression (C) et à un dispositif de stockage d'images (B), dans lequel le dispositif de stockage d'images (B) inclut :
- une unité de réception d'images (20) qui reçoit les données images pour l'impression qui sont transmises depuis l'unité de transmission d'images (8) ;
- un support de stockage (22) pour stocker les données images reçues ; et
- une seconde unité de commande (24) qui est adaptée à exécuter les commandes sur l'unité de réception d'images (20) et sur le support de stockage (22) ;
**caractérisé en ce que** le système inclut encore :
des moyens de sélection de mode de traitement (7b) capables de choisir un mode parmi le groupe de modes suivants :
(i) un mode pour exécuter simultanément la préparation d'impression d'image et le stockage dans le support de stockage (22) qui est un disque dur et l'écriture sur un disque CD-R,
(ii) un mode pour exécuter simultanément la préparation d'impression d'image et le stockage dans le support de stockage (22) qui est un disque dur,
(iii) un mode pour exécuter simultanément la préparation d'impression d'image et l'écriture sur un disque CD-R, et
(iv) un mode pour exécuter le stockage dans le support de stockage (22) qui est un disque dur et/ou l'écriture sur un disque CD-R ;
une première unité de traitement de conversion (3a) qui est adaptée à exécuter un processus de conversion sur les données images pour l'impression qui sont produites dans l'unité de traitement d'images (3) ;
une seconde unité de traitement de conversion (20b) qui est adaptée à exécuter un traitement de conversion sur les données images pour l'impression qui sont produites dans l'unité de réception d'images (20) ; et
des moyens de sélection de traitement de conversion (7a) pour choisir l'une et/ou l'autre de la première unité de traitement de conversion (3a) et la seconde unité de traitement de conversion (20b) en accord avec les capacités de préparation d'impression d'images nécessaires ;
dans lequel le traitement de conversion comprend un traitement consistant à agrandir ou diminuer la taille des données images de telle sorte que les données images sont adaptées à une taille standard pour l'impression ; et
dans lequel le traitement de conversion comprend un traitement de compression ;
dans lequel, quand des impressions d'images peuvent être préparées, la première unité de traitement de conversion (3a) effectue ledit traitement d'agrandissement ou de diminution, et,
quand la seconde unité de traitement de conversion (20b) est choisie, ledit traitement de compression est effectué par la seconde unité de traitement de conversion (20b).

2. Système selon la revendication 1,
**caractérisé en outre en ce que** le système inclut encore une unité d'enregistrement secondaire (23) pour enregistrer les données images reçues dans un support d'enregistrement secondaire, distinct du support de stockage (22), et **en ce que** l'unité d'enregistrement secondaire (23) est également commandée par la seconde unité de commande (24).

3. Système selon la revendication 1 ou 2,
**caractérisé en outre en ce que** les moyens de sélection de mode de traitement (7b) sont capables de choisir un mode pour stocker les données images dans le dispositif de stockage d'images (B) sans exécuter un traitement de conversion sur les données images.
